(19) Europäisches Patentamt
European Patent Office
Office européen des brevets

(11) EP 4 692 288 A1

(12) EUROPEAN PATENT APPLICATION
published in accordance with Art. 153(4) EPC

(43) Date of publication:
**11.02.2026 Bulletin 2026/07**

(21) Application number: **24780522.9**

(22) Date of filing: **27.03.2024**

(51) International Patent Classification (IPC):
***C10M 171/00*** (2006.01) ***B23H 1/08*** (2006.01)
***C10M 101/02*** (2006.01) ***C10M 107/02*** (2006.01)
***C10M 129/10*** (2006.01) ***C10M 129/54*** (2006.01)
***C10M 135/10*** (2006.01) ***C10M 159/22*** (2006.01)
***C10M 159/24*** (2006.01) ***C10M 171/02*** (2006.01)
***C10N 10/02*** (2006.01) ***C10N 10/04*** (2006.01)
***C10N 20/00*** (2006.01) ***C10N 20/02*** (2006.01)
***C10N 30/00*** (2006.01) ***C10N 40/20*** (2006.01)
***C10N 40/24*** (2006.01)

(52) Cooperative Patent Classification (CPC):
**B23H 1/08; C10M 101/02; C10M 107/02; C10M 129/10; C10M 129/54; C10M 135/10; C10M 159/22; C10M 159/24; C10M 171/00; C10M 171/02;** C10N 2010/02; C10N 2010/04; C10N 2020/00; C10N 2020/02; C10N 2030/00;
(Cont.)

(86) International application number:
**PCT/JP2024/012401**

(87) International publication number:
**WO 2024/204420 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058193**

(71) Applicant: **Idemitsu Kosan Co.,Ltd.**
**Tokyo 100-8321 (JP)**

(72) Inventors:
- **KITAMURA, Tomohiko**
  **Tokyo 100-8321 (JP)**
- **OKADA, Akira**
  **Okayama-shi, Okayama 700-8530 (JP)**

(74) Representative: **Vossius & Partner**
**Patentanwälte Rechtsanwälte mbB**
**Siebertstraße 3**
**81675 München (DE)**

# (54) METALWORKING OIL COMPOSITION

(57) Provided is a metalworking oil composition comprising a base oil (A) and an organic acid metal salt (B), and having a kinetic viscosity at 40°C of 0.90 to 4.00 $mm^2/s$ and a volume resistivity at 50°C of less than $2.0\times10^{-1}$ $T\Omega\cdot m$.



Processed by Luminess, 75001 PARIS (FR)

(Cont. next page)

(52) Cooperative Patent Classification (CPC): (Cont.)
C10N 2040/20; C10N 2040/24

## Description

Technical Field

The present invention relates to a metalworking oil composition and an electrical discharge machining method using the metalworking oil composition.

Background Art

Lubricating oil compositions are used in various aspects such as lubricating applications for lubricating sliding parts in a variety of apparatuses, cooling applications for heat-producing devices such as engines, and metalworking applications for improving workability during metalworking.

For example, Patent Literature 1 discloses an invention relating to an electrical discharge machining fluid for machining a workpiece by accumulating discharge craters produced by electrical discharge, wherein the electrical discharge machining fluid comprises a low-viscosity oil having a kinetic viscosity of 1.0 to 3.0 $mm^2/s$ at 40°C and a terpene resin and/or petroleum resin that is solid at 40°C and that has a number average molecular weight of 400 to 1200, and the resin component is contained in an amount of 0.5 to 20% by weight.

Citation List

Patent Literature

Patent Literature 1: JP H06-155165 A

Summary of Invention

Technical Problem

Under such circumstances, the demand exists for a novel metalworking oil composition having excellent metalworkability.

Solution to Problem

In one aspect of the present invention, provided is a metalworking oil composition containing a base oil and an organic acid metal salt and having a kinetic viscosity and a volume resistivity that are regulated to predetermined ranges. Specifically, in one aspect of the present invention, for example, the following aspects [1] to [15] are provided:

[1] A metalworking oil composition comprising a base oil (A) and an organic acid metal salt (B), and having a kinetic viscosity at 40°C of 0.90 to 4.00 $mm^2/s$ and a volume resistivity at 50°C of less than $2.0 \times 10^{-1}$ TΩ·m.
[2] The metalworking oil composition according to [1], which has a flash point of 70°C or higher.
[3] The metalworking oil composition according to [1] or [2], which has a kinetic viscosity at 40°C of 1.00 to 3.00 $mm^2/s$.
[4] The metalworking oil composition according to any one of [1] to [3], wherein the base oil (A) has a kinetic viscosity at 40°C of 0.90 to 4.00 $mm^2/s$.
[5] The metalworking oil composition according to any one of [1] to [4], wherein the base oil (A) is one or more selected from mineral oils, isoparaffins, normal paraffins, and $\alpha$-olefin-based synthetic oils comprising an $\alpha$-olefin as a main component.
[6] The metalworking oil composition according to any one of [1] to [5], wherein the base oil (A) is one or more selected from normal paraffins having 10 to 30 carbon atoms and $\alpha$-olefin-based synthetic oils comprising an $\alpha$-olefin having 10 to 30 carbon atoms as a main component.
[7] The metalworking oil composition according to any one of [1] to [6], wherein a metal constituting the organic acid metal salt (B) is one or more selected from Zn, Ba, Ca, Na, and K.
[8] The metalworking oil composition according to any one of [1] to [7], wherein the organic acid metal salt (B) comprises one or more selected from metal sulfonates, metal salicylates, metal phenates, and organic acid zinc salts.
[9] The metalworking oil composition according to any one of [1] to [7], wherein the organic acid metal salt (B) comprises one or more selected from metal sulfonates, metal salicylates, and metal phenates.
[10] The metalworking oil composition according to any one of [1] to [6], wherein

the organic acid metal salt (B) comprises an organic acid zinc salt, and

the metalworking oil composition has a kinetic viscosity at 40°C of 1.10 to 2.70 $mm^2/s$ and a volume resistivity at 50°C of $8.0\times10^{-2}$ TΩ·m or less.

[11] The metalworking oil composition according to any one of [1] to [10], wherein a content of the organic acid metal salt (B) in terms of metal atom is 60 mass ppm or more based on a total amount of the metalworking oil composition.
[12] The metalworking oil composition according to any one of [1] to [11], wherein a total content of the base oil (A) and the organic acid metal salt (B) is 70% by mass or more based on a total amount of the metalworking oil composition.
[13] The metalworking oil composition according to any one of [1] to [12], wherein a water content is less than 1.0% by mass based on a total amount of the metalworking oil composition.
[14] The metalworking oil composition according to any one of [1] to [13], which is a wire electrical discharge machining oil composition for interposing the metalworking oil composition between a workpiece for metalworking and a wire electrode, and discharging electricity between a metal of the workpiece for metalworking and the wire electrode to machine the workpiece for metalworking.
[15] An electrical discharge machining method comprising interposing the metalworking oil composition according to any one of [1] to [14] between a workpiece for metalworking and a wire electrode, and discharging electricity between a metal of the workpiece for metalworking and the wire electrode to machine the workpiece for metalworking.

Advantageous Effects of Invention

The metalworking oil composition of a preferable aspect of the present invention has excellent metalworkability and, in particular, enables the machining speed in electrical discharge machining to be improved and a smooth machined surface to be provided. Accordingly, the metalworking oil composition of one aspect of the present invention is preferably applied to metalworking, and can be suitably used in electrical discharge machining (in particular, wire electrical discharge machining) as well.

Description of Embodiments

The upper limits and the lower limits of numerical ranges set forth herein can be used in any combination. For example, when a numerical range is described as being "preferably 30 to 100, and more preferably 40 to 80", the range of "30 to 80" and the range of "40 to 100" are also included in the numerical range set forth herein. Also, for example, when a numerical range is described as being "preferably 30 or more and more preferably 40 or more, and preferably 100 or less and more preferably 80 or less", the range of "30 to 80" and the range of "40 to 100" are also included in the numerical range set forth herein.
In addition, for example, "60 to 100" as a numerical range set forth herein means the range of "no less than 60 (60 or more than 60) and no more than 100 (100 or less than 100)".

[Configuration of metalworking oil composition]

The metalworking oil composition of one aspect of the present invention contains a base oil (A) (hereinafter also referred to as a "component (A)") and an organic acid metal salt (B) (hereinafter also referred to as a "component (B)"), and has a kinetic viscosity at 40°C of 0.90 to 4.00 $mm^2/s$ and a volume resistivity at 50°C of less than $2.0\times10^{-1}$ TΩ·m.
The metalworking oil composition of one aspect of the present invention contains the organic acid metal salt (B) in addition to the base oil (A), thereby enabling the work function during electrical discharge machining to be reduced and a broad machining gap to be formed. It is thus easy to expel chips and gases generated in electrical discharge machining, short circuits and abnormal electrical discharges unlikely occur, the machining speed is increased, and stable machining can be performed, thereby enabling the surface of a workpiece to be smoothly machined. Accordingly, the metalworking oil composition of one aspect of the present invention can be suitably used in so-called discharge-based electrical machining, such as sinker electrical discharge machining and wire-cut electrical discharge machining.
The metalworking oil composition of one aspect of the present invention having such a configuration has excellent metalworkability and, in particular, enables the machining speed in electrical discharge machining to be improved and a smooth machined surface of a workpiece to be provided, thus making it possible to also improve metalworkability in electrical discharge machining.
The kinetic viscosity at 40°C of the metalworking oil composition of one aspect of the present invention, from the viewpoint of attaining a metalworking oil composition that has an improved metalworkability and, in particular, from the viewpoint of attaining a metalworking oil composition that enables the machining speed to be improved when used in electrical discharge machining and a smooth machined surface to be provided, is preferably 0.90 $mm^2/s$ or more, 0.95 $mm^2/s$ or more, 1.00 $mm^2/s$ or more, 1.05 $mm^2/s$ or more, 1.10 $mm^2/s$ or more, 1.15 $mm^2/s$ or more, or 1.20 $mm^2/s$ or more, and may also be 1.50 $mm^2/s$ or more, 1.60 $mm^2/s$ or more, more than 1.70 $mm^2/s$, 1.72 $mm^2/s$ or more, 1.75 $mm^2/s$ or

more, 1.77 $mm^2/s$ or more, 1.80 $mm^2/s$ or more, 1.82 $mm^2/s$ or more, 1.85 $mm^2/s$ or more, or 1.87 $mm^2/s$ or more, and is preferably 4.00 $mm^2/s$ or less, 3.70 $mm^2/s$ or less, 3.50 $mm^2/s$ or less, 3.20 $mm^2/s$ or less, 3.00 $mm^2/s$ or less, 2.70 $mm^2/s$ or less, less than 2.50 $mm^2/s$, 2.40 $mm^2/s$ or less, 2.30 $mm^2/s$ or less, 2.20 $mm^2/s$ or less, 2.10 $mm^2/s$ or less, or 2.00 $mm^2/s$ or less, and may also be 1.97 $mm^2/s$ or less, 1.95 $mm^2/s$ or less, 1.92 $mm^2/s$ or less, or 1.90 $mm^2/s$ or less.

Herein, the kinetic viscosity means a value measured in accordance with JIS K 2283:2000.

The volume resistivity at 50°C of the metalworking oil composition of one aspect of the present invention, from the viewpoint of attaining a metalworking oil composition that has an improved metalworkability and, in particular, from the viewpoint of attaining a metalworking oil composition that enables the machining speed to be improved when used in electrical discharge machining and a smooth machined surface to be provided, is preferably less than $2.0\times10^{-1}$ TΩ·m, $1.0\times10^{-1}$ TΩ·m or less, $8.0\times10^{-2}$ TΩ·m or less, $6.0\times10^{-2}$ TΩ·m or less, $4.0\times10^{-2}$ TΩ·m or less, $2.0\times10^{-2}$ TΩ·m or less, $1.0\times10^{-2}$ TΩ·m or less, $8.0\times10^{-3}$ TΩ·m or less, $6.0\times10^{-3}$ TΩ·m or less, $4.0\times10^{-3}$ TΩ·m or less, $2.0\times10^{-3}$ TΩ·m or less, $1.0\times10^{-3}$ TΩ·m or less, $8.0\times10^{-4}$ TΩ·m or less, $6.0\times10^{-4}$ TΩ·m or less, $4.0\times10^{-4}$ TΩ·m or less, $2.0\times10^{-4}$ TΩ·m or less, $1.0\times10^{-4}$ TΩ·m or less, $8.0\times10^{-3}$ TΩ·m or less, $6.0\times10^{-5}$ TΩ·m or less, $4.0\times10^{-5}$ TΩ·m or less, less than $2.0\times10^{-5}$ TΩ·m, or $1.0\times10^{-5}$ TΩ·m or less, and may also be $1.0\times10^{-10}$ TΩ·m or more, $1.0\times10^{-9}$ TΩ·m or more, $1.0\times10^{-8}$ TΩ·m or more, or $1.0\times10^{-7}$ TΩ·m or more.

Herein, the volume resistivity means a value obtained from a current value one minute after applying a voltage of 250 V/mm at an oil temperature of 50°C in accordance with JIS C 2101.

As for the metalworking oil composition of one aspect of the present invention, the type, kinetic viscosity, and content of the component (A) and the type, base number, and content of the component (B) are regulated so that the kinetic viscosity and the volume resistivity of the metalworking oil composition are regulated to be within the above ranges, thereby giving a metalworking oil composition that has an improved metalworkability and, in particular, enables the machining speed to be improved when used in electrical discharge machining and a smooth machined surface to be provided.

The flash point of the metalworking oil composition of one aspect of the present invention, from the viewpoint of attaining a metalworking oil composition having excellent handleability, is preferably 70°C or higher, more preferably 90°C or higher, more preferably 100°C or higher, even more preferably 110°C or higher, yet more preferably 116°C or higher, and particularly preferably 120°C or higher.

Herein, the flash point means a value measured in accordance with JIS K 2265-4.

The metalworking oil composition of one aspect of the present invention may contain other additives in addition to the components (A) and (B).

The total content of the components (A) and (B) in the metalworking oil composition of one aspect of the present invention, from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, may be 70% by mass or more, 75% by mass or more, 80% by mass or more, 85% by mass or more, 90% by mass or more, 93% by mass or more, 95% by mass or more, 97% by mass or more, 99% by mass or more, or 99.9% by mass or more based on the total amount (100% by mass) of the metalworking oil composition.

Below, the components contained in the metalworking oil composition of one aspect of the present invention will now be described.

<Component (A): Base oil >

The component (A) used in one aspect of the present invention may be one or more selected from mineral oils and synthetic oils.

Examples of mineral oils include atmospheric residues obtained by atmospheric distillation of crude oils such as paraffin-based crude oils, intermediate crude oils, or naphthene-based crude oils; distillates obtained by vacuum distillation of such atmospheric residues; and refined oils obtained by subjecting such distillates to one or more refining treatments such as solvent deasphalting, solvent extraction, hydrocracking, solvent dewaxing, catalytic dewaxing, and hydrorefining.

Examples of synthetic oils include normal paraffins; isoparaffins; α-olefins; poly-α-olefins such as α-olefin homopolymers or α-olefin copolymers (e.g., α-olefin copolymers having 8 to 14 carbon atoms such as ethylene-α-olefin copolymers); polyalkylene glycols; ester-based oils such as polyol esters and dibasic acid esters; ether-based oils such as polyphenyl ether; alkylbenzenes; alkylnaphthalenes; and synthetic oils (GTL) obtained by isomerizing wax (GTL wax (Gas To Liquids WAX)) produced from natural gas by Fischer-Tropsch method or the like.

Among these, from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, the component (A) used in one aspect of the present invention is preferably one or more selected from mineral

oils, isoparaffins, normal paraffins, and α-olefin-based synthetic oils, more preferably one or more selected from mineral oils, isoparaffins having 10 to 30 carbon atoms, normal paraffins having 10 to 30 carbon atoms, and α-olefin-based synthetic oils containing an α-olefin having 10 to 30 carbon atoms as a main component, and, from the viewpoint of attaining a metalworking oil composition having a low viscosity, a high flash point, and excellent safety, even more preferably one or more selected from normal paraffins having 10 to 30 carbon atoms and α-olefin-based synthetic oils containing an α-olefin having 10 to 30 carbon atoms as a main component, and yet more preferably a normal paraffin having 10 to 30 carbon atoms.

Herein, the main component means the component with the highest content among the components constituting the component (A), and means the component accounting for, for example, 30% by mass or more, 40% by mass or more, 50% by mass or more, 60% by mass or more, 70% by mass or more, 80% by mass or more, 90% by mass or more, or 95% by mass or more based on the total amount (100% by mass) of the component (A).

From the above viewpoints, the number of carbon atoms of the normal paraffin and the number of carbon atoms of the α-olefin contained as the main component in the α-olefin-based synthetic oil are, each independently, preferably 10 or more, more preferably 12 or more, and even more preferably 13 or more, and preferably 30 or less, more preferably 20 or less, even more preferably 17 or less, and yet more preferably 15 or less.

The kinetic viscosity at 40°C of the component (A) used in one aspect of the present invention, from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, is preferably 0.90 $mm^2/s$ or more, 1.00 $mm^2/s$ or more, 1.10 $mm^2/s$ or more, more than 1.20 $mm^2/s$, 1.22 $mm^2/s$ or more, 1.25 $mm^2/s$ or more, 1.27 $mm^2/s$ or more, 1.30 $mm^2/s$ or more, 1.32 $mm^2/s$ or more, or 1.35 $mm^2/s$ or more, and is preferably 4.00 $mm^2/s$ or less, 3.50 $mm^2/s$ or less, 3.20 $mm^2/s$ or less, 3.00 $mm^2/s$ or less, 2.70 $mm^2/s$ or less, less than 2.50 $mm^2/s$, 2.20 $mm^2/s$ or less, 2.00 $mm^2/s$ or less, 1.90 $mm^2/s$ or less, 1.80 $mm^2/s$ or less, 1.70 $mm^2/s$ or less, or 1.60 $mm^2/s$ or less.

In the metalworking oil composition of one aspect of the present invention, the content of the component (A), from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, is preferably 60% by mass or more, 65% by mass or more, 70% by mass or more, 75% by mass or more, 80% by mass or more, 85% by mass or more, 90% by mass or more, 92% by mass or more, 94% by mass or more, or 96% by mass or more, and is preferably 99.99% by mass or less, 99.95% by mass or less, 99.90% by mass or less, 99.80% by mass or less, 99.70% by mass or less, 99.60% by mass or less, or 99.50% by mass or less, based on the total amount (100% by mass) of the metalworking oil composition.

<Component (B): Organic acid metal salt>

The component (B) used in one aspect of the present invention may be a metal salt obtained by replacing the hydrogen atom of the sulfo group ($-SO_3H$) of an organic sulfonic acid, or the hydrogen atom of the carboxy group (-COOH) of an organic carboxylic acid, with a metal atom.

The component (B) may be an organic acid metal salt having a Pauling electronegativity of 2 or less, or may be an organic acid metal salt having a Pauling electronegativity of more than 2.

The metal atom constituting the component (B), from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, is preferably one or more selected from Zn, Ba, Ca, Na, and K, and more preferably one or more selected from Zn, Ca, and Na.

Examples of the organic acid constituting the component (B) include carboxylic acids and sulfonic acids.

Examples of carboxylic acids include monocarboxylic acids such as caproic acid, caprylic acid, nonanoic acid, capric acid, lauric acid, myristic acid, palmitic acid, palmitoleic acid, stearic acid, oleic acid, linoleic acid, linolenic acid, arachic acid, behenic acid, melissic acid, isononanoic acid, neodecanoic acid, and isostearic acid; hydroxycarboxylic acids such as glycolic acid, hydroxyacrylic acid, oxybutyric acid, glyceric acid, malic acid, tartaric acid, citric acid, lactic acid, and salicylic acid; and polycarboxylic acids such as malonic acid, succinic acid, glutaric acid, adipic acid, maleic acid, fumaric acid, and phthalic acid.

Examples of sulfonic acids include naphthalenesulfonic acids such as 1-naphthalenesulfonic acid, 2-naphthalenesulfonic acid, 2,7-naphthalenedisulfonic acid, 1,5-naphthalenedisulfonic acid, 2,6-naphthalenedisulfonic acid, 1,3,6-naphthalenetrisulfonic acid, 3,6-dihydroxynaphthalene-2,7-disulfonic acid, 6-methyl-2-naphthalenesulfonic acid, 4-ethyl-1-naphthalenesulfonic acid, 5-isopropyl-1-naphthalenesulfonic acid, and 5-butyl-2-naphthalenesulfonic acid; benzenesulfonic acids such as benzenesulfonic acid, p-ethylbenzenesulfonic acid, 2,4,6-trimethylbenzenesulfonic acid, xylenesulfonic acid, o-toluenesulfonic acid, p-toluenesulfonic acid, and p-cumenesulfonic acid; and azulenesulfonic acids such as 1-azulenesulfonic acid, guaiazulenesulfonic acid, 3-methyl-7-isopropyl-1-azulenesulfonic acid, 7-isopropyl-1-azulenesulfonic acid, 3-phenyl-6-isopropyl-1-azulenesulfonic acid, 1,4-dimethyl-7-isopropyl-2-azulenesulfonic acid, 1,3-azulenedisulfonic acid, 4,6,8-trimethyl-1,3-azulenedisulfonic acid, 1,3-bis(1,1-dimethylethyl)-5,7-azulenedisulfonic acid, and 1,3-bis(1,1-dimethylethyl)-5-azulenesulfonic acid.

Among these, from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, the component (B) used in one aspect of the present invention preferably contains one or more selected from metal sulfonates, metal salicylates, metal phenates, and organic acid zinc salts, and more preferably contains one or more selected from metal sulfonates and organic acid zinc salts.

From the above viewpoints, the component (B) used in one aspect of the present invention preferably contains one or more selected from calcium sulfonate, calcium salicylate, calcium phenate, sodium sulfonate, sodium salicylate, sodium phenate, and organic acid zinc salts, and more preferably contains one or more selected from calcium sulfonate, sodium sulfonate, and organic acid zinc salts.

In one aspect of the present invention, the metalworking oil composition may contain one or more selected from metal sulfonates, metal salicylates, metal phenates, and organic acid zinc salts as the component (B).

In one aspect of the present invention, the metal sulfonate used as the component (B) may be a compound represented by general formula (b-1), the metal salicylate used as the component (B) may be a compound represented by general formula (b-2), and the metal phenate used as the component (B) may be a compound represented by general formula (b-3) below.

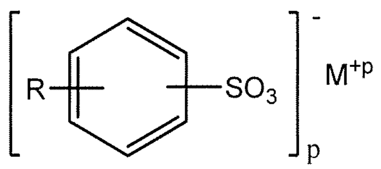

(b-1)

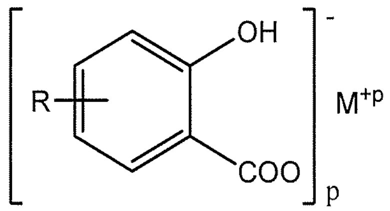

(b-2)

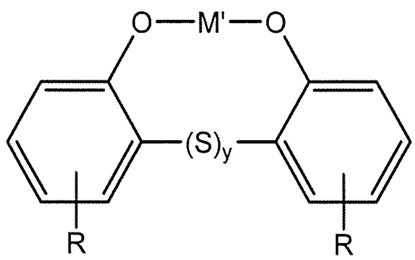

(b-3)

In general formulae (b-1) and (b-2), M is a metal atom selected from alkali metals and alkaline earth metals, preferably sodium, calcium, magnesium, or barium, and more preferably sodium or calcium.

In general formula (b-3), M' is an alkaline earth metal, preferably calcium, magnesium, or barium, and more preferably calcium. y is an integer of 0 or more, and preferably an integer of 0 to 3.

In general formulae (b-1) to (b-3), p is the valence of M, and is 1 or 2. R is a hydrogen atom or a hydrocarbon group having 1 to 18 carbon atoms.

Examples of the hydrocarbon group that can be selected as R include alkyl groups having 1 to 18 carbon atoms, alkenyl groups having 1 to 18 carbon atoms, cycloalkyl groups having 3 to 18 ring-forming carbon atoms, aryl groups having 6 to 18 ring-forming carbon atoms, alkylaryl groups having 7 to 18 carbon atoms, and arylalkyl groups having 7 to 18 carbon atoms.

The metal sulfonates, the metal salicylates, and the metal phenates may be perbasic metal salts having 100 mg

KOH/g or more, or may be neutral metal salts having less than 100 mg KOH/g.

The base number of the perbasic metal salts may be 100 mg KOH/g or more, 120 mg KOH/g or more, 150 mg KOH/g or more, 170 mg KOH/g or more, or 200 mg KOH/g or more, and may be 600 mg KOH/g or less, 550 mg KOH/g or less, 500 mg KOH/g or less, 450 mg KOH/g or less, or 400 mg KOH/g or less.

The base number of the neutral metal salts may be less than 100 mg KOH/g, 0 to 90 mg KOH/g, 0 to 70 mg KOH/g, 0 to 50 mg KOH/g, 0 to 40 mg KOH/g, 0 to 30 mg KOH/g, 0 to 20 mg KOH/g, or 0 to 10 mg KOH/g.

Herein, the base number means a value measured in accordance with "9. Potentiometric titration method (base number - perchloric acid method)" of JIS K 2501 "Petroleum products and lubricants - Determination of neutralization number".

In one aspect of the present invention, the metalworking oil composition may contain an organic acid zinc salt as the component (B).

The kinetic viscosity at 40°C of the metalworking oil composition containing an organic acid zinc salt is preferably 1.10 $mm^2/s$ or more, 1.20 $mm^2/s$ or more, 1.30 $mm^2/s$ or more, 1.40 $mm^2/s$ or more, 1.50 $mm^2/s$ or more, 1.60 $mm^2/s$ or more, 1.70 $mm^2/s$ or more, 1.75 $mm^2/s$ or more, 1.77 $mm^2/s$ or more, 1.80 $mm^2/s$ or more, 1.82 $mm^2/s$ or more, 1.85 $mm^2/s$ or more, or 1.87 $mm^2/s$ or more, and is preferably 4.00 $mm^2/s$ or less, 3.50 $mm^2/s$ or less, 3.20 $mm^2/s$ or less, 3.00 $mm^2/s$ or less, 2.70 $mm^2/s$ or less, less than 2.50 $mm^2/s$, 2.40 $mm^2/s$ or less, 2.30 $mm^2/s$ or less, 2.20 $mm^2/s$ or less, 2.10 $mm^2/s$ or less, 2.00 $mm^2/s$ or less, or 1.98 $mm^2/s$ or less.

The volume resistivity at 50°C of the metalworking oil composition containing an organic acid zinc salt is preferably $8.0\times10^{-2}$ TΩ·m or less, $6.0\times10^{-2}$ TΩ·m or less, $4.0\times10^{-2}$ TΩ·m or less, $2.0\times10^{-2}$ TΩ·m or less, or $1.0\times10^{-2}$ TΩ·m or less, and may be $1.0\times10^{-10}$ TΩ·m or more, $1.0\times10^{-9}$ TΩ·m or more, $1.0\times10^{-8}$ TΩ·m or more, $1.0\times10^{-7}$ TΩ·m or more, $1.0\times10^{-6}$ TΩ·m or more, $1.0\times10^{-5}$ TΩ·m or more, or $1.0\times10^{-4}$ TΩ·m or more.

In the metalworking oil composition of one aspect of the present invention, the content of the component (B), from the viewpoint of attaining a metalworking oil composition that has a further improved metalworkability and, in particular, from the viewpoint of attaining a metalworking oil composition that enables the machining speed to be further improved when used in electrical discharge machining and a smoother machined surface to be provided, is preferably 0.05% by mass or more, 0.10% by mass or more, 0.15% by mass or more, 0.20% by mass or more, 0.25% by mass or more, or 0.30% by mass or more, and is preferably 10.0% by mass or less, 8.0% by mass or less, 7.0% by mass or less, 6.0% by mass or less, 5.0% by mass or less, 4.0% by mass or less, 3.5% by mass or less, 3.0% by mass or less, or 2.5% by mass or less, based on the total amount (100% by mass) of the metalworking oil composition.

In the metalworking oil composition of one aspect of the present invention, the content of the component (B) in terms of metal atom from the above viewpoints is preferably 60 ppm by mass or more, 70 ppm by mass or more, 80 ppm by mass or more, 100 ppm by mass or more, 120 ppm by mass or more, 140 ppm by mass or more, 160 ppm by mass or more, 200 ppm by mass or more, 300 ppm by mass or more, or 400 ppm by mass or more, 500 ppm by mass or more, 600 ppm by mass or more, or 700 ppm by mass or more, and is preferably 10000 ppm by mass or less, 8000 ppm by mass or less, 6000 ppm by mass or less, 5000 ppm by mass or less, 4000 ppm by mass or less, 3500 ppm by mass or less, 3000 ppm by mass or less, 2500 ppm by mass or less, 2000 ppm by mass or less, or 1500 ppm by mass or less, based on the total amount (100% by mass) of the metalworking oil composition.

Herein, the metal atom content means a value measured in accordance with JPI-5S-38-92.

<Other various additives>

The metalworking oil composition of one aspect of the present invention may further contain as necessary other additives in addition to the components (A) and (B) as long as the effects of the present invention are not impaired.

Examples of such other various additives include thickeners, oil-soluble resins, anticorrosives, antifoaming agents, antioxidants, and metal deactivators.

One of such additives may be used singly, or two or more may be used as a combination.

Examples of the thickener used in one aspect of the present invention include polybutene, polyisobutylene, polyvinyl acetate, polyalkyl acrylate, ethylene-propylene copolymers, and polyalkylene glycol.

In the metalworking oil composition of one aspect of the present invention, the thickener content may be 0.1% by mass or more, 0.5% by mass or more, or 1.0% by mass or more, and may be 15% by mass or less, 5.0% by mass or less, or 2.0% by mass or less, based on the total amount (100% by mass) of the metalworking oil composition, and the content may be further limited to 1.0% by mass or less, 0.1% by mass or less, 0.01% by mass or less, 0.001% by mass or less, or 0.0001% by mass or less.

Examples of the oil-soluble resin used in one aspect of the present invention include polymers such as dipentene, tetraterpene, and polyterpene, or hydrogenated products thereof; cyclopentadiene-dicyclopentadiene copolymer-based petroleum resins or hydrogenated products thereof; rosin esters; coumarone resins; and coumarone-indene resins.

The number average molecular weight of the oil-soluble resin used in one aspect of the present invention may be 200 or more, 300 or more, 400 or more, or 500 or more, and may be 5000 or less, 4000 or less, 3000 or less, or 2000 or less.

In the metalworking oil composition of one aspect of the present invention, the oil-soluble resin content may be 0.1% by mass or more, 0.5% by mass or more, or 1.0% by mass or more, and may be 15% by mass or less, 5.0% by mass or less, or 2.0% by mass or less, based on the total amount (100% by mass) of the metalworking oil composition, and the content may be further limited to 1.0% by mass or less, 0.1% by mass or less, 0.01% by mass or less, 0.001% by mass or less, or 0.0001% by mass or less.

Examples of the anticorrosive used in one aspect of the present invention include alkylbenzene sulfonate, dinonylnaphthalene sulfonate, alkenyl succinate, and polyhydric alcohol esters.

In the metalworking oil composition of one aspect of the present invention, the anticorrosive content may be 0.01% by mass or more, 0.05% by mass or more, or 0.10% by mass or more, and may be 5.0% by mass or less, 3.0% by mass or less, or 2.0% by mass or less, based on the total amount (100% by mass) of the metalworking oil composition, and the content may be further limited to 1.0% by mass or less, 0.1% by mass or less, 0.01% by mass or less, 0.001% by mass or less, or 0.0001% by mass or less.

Examples of the antifoaming agent used in one aspect of the present invention include silicone-based antifoaming agents, fluorosilicone-based antifoaming agents, fluoroalkyl ether-based antifoaming agents, and polyacrylate-based antifoaming agents.

In the metalworking oil composition of one aspect of the present invention, the antifoaming agent content may be 0.001% by mass or more, 0.005% by mass or more, or 0.01% by mass or more, and may be 3.0% by mass or less, 1.0% by mass or less, or 0.50% by mass or less, based on the total amount (100% by mass) of the metalworking oil composition, and the content may be further limited to 1.0% by mass or less, 0.1% by mass or less, 0.01% by mass or less, 0.001% by mass or less, or 0.0001% by mass or less.

Examples of the antioxidant used in one aspect of the present invention include amine-based antioxidants such as alkylated diphenylamine, phenylnaphthylamine, and alkylated phenylnaphthylamine; and phenol-based antioxidants such as 2,6-di-t-butylphenol, 4,4'-methylenebis(2,6-di-t-butylphenol), isooctyl-3-(3,5-di-t-butyl-4-hydroxyphenyl)propionate, and n-octadecyl-3-(3,5-di-t-butyl-4-hydroxyphenyl)propionate.

In the metalworking oil composition of one aspect of the present invention, the antioxidant content may be 0.01% by mass or more, 0.05% by mass or more, or 0.10% by mass or more, and may be 7.0% by mass or less, 5.0% by mass or less, or 3.0% by mass or less, based on the total amount (100% by mass) of the metalworking oil composition, and the content may be further limited to 2.0% by mass or less, 1.0% by mass or less, 0.1% by mass or less, 0.01% by mass or less, 0.001% by mass or less, or 0.0001% by mass or less.

Examples of the metal deactivator used in one aspect of the present invention include benzotriazole, imidazoline, pyrimidine derivatives, and thiadiazole.

In the metalworking oil composition of one aspect of the present invention, the metal deactivator content may be 0.01% by mass or more, 0.05% by mass or more, or 0.10% by mass or more, and may be 2.0% by mass or less, 1.0% by mass or less, or 0.50% by mass or less, based on the total amount (100% by mass) of the metalworking oil composition, and the content may be further limited to 0.10% by mass or less, 0.01% by mass or less, 0.001% by mass or less, 0.0001% by mass or less, or 0.00001% by mass or less.

In the metalworking oil composition of one aspect of the present invention, a smaller water content is more preferable from the viewpoint of favorable metal workability.

In the metalworking oil composition of one aspect of the present invention, the water content is preferably less than 5.0% by mass, less than 4.0% by mass, less than 3.0% by mass, 2.5% by mass or less, less than 2.0% by mass, less than 1.5% by mass, less than 1.0% by mass, less than 0.50% by mass, or less than 0.25% by mass based on the total amount (100% by mass) of the metalworking oil composition. The water content means the amount of water dissolved in the metalworking oil composition.

In the metalworking oil composition of one aspect of the present invention, a smaller content of a diluent selected from water and an organic solvent is more preferable from the viewpoint of favorable metal workability.

In the metalworking oil composition according to one aspect of the present invention, the diluent content is preferably less than 5.0% by mass, less than 4.0% by mass, less than 3.0% by mass, 2.5% by mass or less, less than 2.0% by mass, less than 1.5% by mass, less than 1.0% by mass, less than 0.50% by mass, or less than 0.25% by mass based on the total amount (100% by mass) of the metalworking oil composition. The organic solvent content means the amount of organic solvent dissolved in the metalworking oil composition.

The metalworking oil composition of one aspect of the present invention may be a metalworking oil that is used after being diluted with a diluent selected from water and an organic solvent, or may be a metalworking oil that is used without being diluted.

[Method for producing metalworking oil composition]

The method for producing the metalworking oil composition of one aspect of the present invention is not particularly limited, and is preferably a method comprising blending the component (A) with the component (B) and

optionally other additives. The order of blending the components can be suitably determined.

[Applications of metalworking oil composition]

The metalworking oil composition of one aspect of the present invention has excellent metal workability.

Accordingly, the metalworking oil composition of one aspect of the present invention can be suitably used in various metalworking applications such as cutting, pressing, drawing, ironing, bending, rolling, and cold forging.

The workpiece for metalworking that is the target of metal working with the metalworking oil composition of one aspect of the present invention is not particularly limited, and may be a metal material composed of a metal selected from the group consisting of tool steel, cemented carbide, iron, titanium, aluminum, titanium alloy, alloy steel, nickel-based alloy, niobium alloy, tantalum alloy, molybdenum alloy, tungsten alloy, stainless steel, aluminum alloy, and mangalloy.

The metalworking oil composition of one aspect of the present invention, in particular, can provide the effect of enabling the machining speed in electrical discharge machining to be improved and a smooth machined surface to be provided. Accordingly, the metalworking oil composition of one aspect of the present invention is preferably applied to metal working, and can also be suitably used in electrical discharge machining (in particular, wire electrical discharge machining).

That is to say, the metalworking oil composition of one aspect of the present invention can be suitably used as a wire electrical discharge machining oil composition for interposing the metalworking oil composition between a workpiece for metalworking and a wire electrode, and discharging electricity between the metal of the workpiece for metalworking and the wire electrode to machine the workpiece for metalworking.

Due to such characteristics, the following aspects [1] and [2] can also be provided in one aspect of the present invention:

[1] A method for using a metalworking oil composition, wherein the above-described metalworking oil composition of one aspect of the present invention is interposed between a workpiece for metalworking and a wire electrode, and electricity is discharged between a metal of the workpiece for metalworking and the wire electrode to machine the workpiece for metalworking.

[2] An electrical discharge machining method comprising interposing the above-described metalworking oil composition of one aspect of the present invention between a workpiece for metalworking and a wire electrode, and discharging electricity between a metal of the workpiece for metalworking and the wire electrode to machine the workpiece for metalworking.

The workpiece for metalworking set forth in [1] and [2] is as described above. The methods set forth in [1] and [2] enable the machining speed in electrical discharge machining to be improved and a smooth machined surface of the workpiece for metalworking to be formed.

Examples

Next, the present invention will now be described in more detail by way of Examples, but the present invention is not limited to these Examples in any way.

In the Examples below, the methods for measuring and calculating the following physical property values are as follows:

(1) Kinetic viscosity, viscosity index
Measured and calculated in accordance with JIS K 2283:2000.
(2) Base number (perchloric acid method)
Measured in accordance with "9. Potentiometric titration method (base number - perchloric acid method)" of JIS K 2501 "Petroleum products and lubricants - Determination of neutralization number".
(3) Metal atom (Ca, Na, Zn) content
Measured in accordance with JPI-5S-38-92.
(4) Flash point
Measured in accordance with JIS K 2265-4.
(5) Volume resistivity
Calculated from a current value one minute after applying a voltage of 250 V/mm at an oil temperature of 50°C in accordance with JIS C 2101.

Examples 1 to 5 and Comparative Examples 1 to 6

A variety of components shown in Tables 1 and 2 were added in the amounts shown in the tables and mixed to prepare metalworking oil compositions. The amount of organic acid metal salt is the amount in terms of active component. Details of the components used in the preparation of the metalworking oil compositions are as follows.

<Base oil (A)>

- "α-olefin (1)": α-olefin-based synthetic oil containing α-olefin having 14 carbon atoms as a main component, 40°C kinetic viscosity = 1.8 $mm^2/s$.
- "α-olefin (2)": α-olefin-based synthetic oil containing α-olefin having 10 carbon atoms as a main component, 40°C kinetic viscosity = 0.87 $mm^2/s$.
- "α-olefin (3)": α-olefin-based synthetic oil containing α-olefin having 12 carbon atoms as a main component, 40°C kinetic viscosity = 1.2 $mm^2/s$.
- "α-olefin (4)": α-olefin-based synthetic oil containing α-olefin having 16 carbon atoms as a main component, 40°C kinetic viscosity = 2.6 $mm^2/s$.
- "PAO": Poly-α-olefin-based synthetic oil, 40°C kinetic viscosity = 5.1 $mm^2/s$.

<Organic acid metal salt (B)>

- "Ca sulfonate": Calcium sulfonate having a base number of 495 mg KOH/g.
- "Na sulfonate": Sodium sulfonate having a base number of 3.85 mg KOH/g.
- "Zinc salt": Zinc salt of fatty acid having a base number of 0.25 mg KOH/g, zinc atom content = 10.6% by mass.

Concerning the prepared metalworking oil compositions, properties such as 40°C kinetic viscosity, the content of metal atoms (Ca, Na, Zn) derived from organic acid metal salts, flash point, and volume resistivity were measured, and the following metal workability evaluation tests were conducted. The test results are shown in Tables 1 and 2.

(1) Evaluation of metal workability based on machining speed ratio

The machining speed was measured when wire electrical discharge machining was performed on steel under the following machining conditions using the prepared metalworking oil compositions. The machining speed was calculated using the following expression:

-

$$\text{Machining speed } (mm^3/min) = L \times T \times W / t$$

wherein L is a machining distance (mm), T is a thickness of workpiece for metalworking (mm), W is an average groove width (mm), and t is a machining time (min).

<Workpiece for metalworking (work)>

- SKD11 (thickness 2.0 mm)

<Machining conditions>

- Machine: MAKINO UPV-3 (product name, manufactured by Makino Milling Machine Co., Ltd.)
- Wire diameter: 0.20 mm
- Wire material: Brass

- Maximum cutting speed: 10 mm/min
- Wire travel speed: 20 m/min

In addition, the "machining speed ratio to the machining speed of Comparative Example 1" (hereinafter also referred to as the "machining speed ratio") was calculated from the following expression. It can be said that a greater machining speed ratio indicates a metalworking oil composition having better metal workability.

- Machining speed ratio = [Machining speed ($mm^3$/min) when metalworking oil composition of interest was used] / [Machining speed ($mm^3$/min) when metalworking oil composition of Comparative Example 1 was used]

(2) Evaluation of metal workability based on machined-surface roughness Rz ratio

The maximum height of roughness Rz of the cut surface of a workpiece for metalworking after measuring the machining speed in (1) above (hereinafter also referred to as the "machined-surface roughness Rz") was measured with a contact-type surface texture measuring instrument Surfcom 1400D/G (product name, manufactured by Tokyo Seimitsu Co., Ltd.) in accordance with JIS B 0633:2001.

Then, the "ratio of the machined-surface roughness Rz to the machined-surface roughness Rz of Comparative Example 1" (hereinafter also referred to as the "machined-surface roughness Rz ratio") was calculated according to the following expression. It can be said that a smaller machined-surface roughness Rz ratio indicates a metalworking oil composition having better metal workability:

- Machined-surface roughness Rz ratio = [Machined-surface roughness Rz (μm) when metalworking oil composition of interest was used]/[Machined-surface roughness Rz (μm) when metalworking oil composition of Comparative Example 1 was used]

[Table 1]

| | | | | Example 1 | Example 2 | Example 3 | Example 4 | Example 5 | Comparative Example 1 |
|---|---|---|---|---|---|---|---|---|---|
| Composition | Base oil (A) | α-olefin (1) | % by mass | 99.68 | 99.68 | 98.38 | 99.33 | 97.99 | 100.00 |
| | | α-olefin (2) | % by mass | - | - | - | - | - | - |
| | | α-olefin (3) | % by mass | - | - | - | - | - | - |
| | | α-olefin (4) | % by mass | - | - | - | - | - | - |
| | | PAO | % by mass | - | - | - | - | - | - |
| | Organic acid metal salt (B) | Ca sulfonate | % by mass | 0.33 | - | - | - | - | - |
| | | Na sulfonate | % by mass | - | 0.33 | 1.63 | - | - | - |
| | | Organic acid zinc salt | % by mass % | - | - | - | 0.67 | 2.01 | - |
| | Total | | by mass | 100.00 | 100.00 | 100.00 | 100.00 | 100.00 | 100.00 |
| Property | 40°C kinetic viscosity | | $mm^2/s$ | 1.89 | 1.90 | 1.97 | 1.88 | 1.91 | 1.87 |
| | Content of metal atom derived from organic acid metal salt | | mass ppm | 638 | 111 | 553 | 1090 | 3270 | 0 |
| | Flash point | | °C | 122 | 124 | 122 | 120 | 118 | 122 |
| | Volume resistivity (50°C) | | TΩ·m | $8.6\times10^{-5}$ | $5.2\times10^{-5}$ | $5.6\times10^{-6}$ | $5.7\times10^{-2}$ | $3.4\times10^{-3}$ | $1.2\times10^{1}$ |
| Evaluation | Machining speed ratio to machining speed of Comparative Example 1 | | - | 1.10 | 1.10 | 1.11 | 1.07 | 1.05 | Reference |
| | Machined-surface roughness Rz ratio to machined-surface roughness Rz of Comparative Example 1 | | - | 0.83 | 0.83 | 0.80 | 0.89 | 0.89 | Reference |

[Table 2]

| | | | | Comparative Example 2 | Comparative Example 3 | Comparative Example 4 | Comparative Example 5 | Comparative Example 6 |
|---|---|---|---|---|---|---|---|---|
| Composition | Base oil (A) | α-olefin (1) | % by mass | - | - | - | - | - |
| | | α-olefin (2) | % by mass | 100.00 | - | - | - | - |
| | | α-olefin (3) | % by mass | - | 100.00 | - | - | - |
| | | α-olefin (4) | % by mass | - | - | 100.00 | - | - |
| | | PAO | % by mass | - | - | - | 100.00 | 98.38 |
| | Organic acid metal salt (B) | Ca sulfonate | % by mass | - | - | - | - | - |
| | | Na sulfonate | % by mass | - | - | - | - | 1.63 |
| | | Organic acid zinc salt | % by mass | - | - | - | - | - |
| | Total | | % by mass | 0.00 | 100.00 | 100.00 | 100.00 | 100.00 |
| Property | 40°C kinetic viscosity | | $mm^2/s$ | 0.87 | 1.30 | 2.61 | 5.10 | 5.15 |
| | Content of metal atom derived from organic acid metal salt | | mass ppm | 0 | 0 | 0 | 0 | 553 |
| | Flash point | | °C | 64 | 86 | 144 | 166 | 160 |
| | Volume resistivity (50°C) | | TΩ·m | (*) | $1.1\times10^1$ | $1.2\times10^1$ | $1.0x10^2$ | $1.0\times10^{-5}$ |
| Evaluation | Machining speed ratio to machining speed of Comparative Example 1 | | - | (*) | 0.90 | 1.08 | 0.90 | 0.94 |
| | Machined-surface roughness Rz ratio to machined-surface roughness Rz of Comparative Example 1 | | - | (*) | 1.04 | 1.04 | 1.03 | 0.79 |

(*): The flash point was excessively low, so neither the volume resistivity was measured nor the metalworkability evaluation test was conducted.

As can be understood from Table 1, the metalworking oil compositions prepared in Examples 1 to 5 contain an organic acid metal salt and have a 40°C kinetic viscosity and volume resistivity that are regulated to predetermined ranges, thus resulting in a higher machining speed ratio, lower machined-surface roughness Rz, and better metal workability than the metalworking oil compositions of Comparative Examples 1 to 6. Note that, in Comparative Example 2, the flash point of the metalworking oil composition was excessively low, so neither the volume resistivity was measured nor the metalworkability evaluation test was conducted.

## Claims

1. A metalworking oil composition comprising a base oil (A) and an organic acid metal salt (B), and having a kinetic viscosity at 40°C of 0.90 to 4.00 $mm^2/s$ and a volume resistivity at 50°C of less than $2.0\times10^{-1}$ TΩ·m.

2. The metalworking oil composition according to claim 1, which has a flash point of 70°C or higher.

3. The metalworking oil composition according to claim 1 or 2, which has a kinetic viscosity at 40°C of 1.00 to 3.00 $mm^2/s$.

4. The metalworking oil composition according to any one of claims 1 to 3, wherein the base oil (A) has a kinetic viscosity at 40°C of 0.90 to 4.00 $mm^2/s$.

5. The metalworking oil composition according to any one of claims 1 to 4, wherein the base oil (A) is one or more selected from mineral oils, isoparaffins, normal paraffins, and α-olefin-based synthetic oils comprising an α-olefin as a main component.

6. The metalworking oil composition according to any one of claims 1 to 5, wherein the base oil (A) is one or more selected from normal paraffins having 10 to 30 carbon atoms and α-olefin-based synthetic oils comprising an α-olefin having 10 to 30 carbon atoms as a main component.

7. The metalworking oil composition according to any one of claims 1 to 6, wherein a metal constituting the organic acid metal salt (B) is one or more selected from Zn, Ba, Ca, Na, and K.

8. The metalworking oil composition according to any one of claims 1 to 7, wherein the organic acid metal salt (B) comprises one or more selected from metal sulfonates, metal salicylates, metal phenates, and organic acid zinc salts.

9. The metalworking oil composition according to any one of claims 1 to 7, wherein the organic acid metal salt (B) comprises one or more selected from metal sulfonates, metal salicylates, and metal phenates.

10. The metalworking oil composition according to any one of claims 1 to 6, wherein

    the organic acid metal salt (B) comprises an organic acid zinc salt, and
    the metalworking oil composition has a kinetic viscosity at 40°C of 1.10 to 2.70 $mm^2/s$ and a volume resistivity at 50°C of $8.0\times10^{-2}$ TΩ·m or less.

11. The metalworking oil composition according to any one of claims 1 to 10, wherein a content of the organic acid metal salt (B) in terms of metal atom is 60 mass ppm or more based on a total amount of the metalworking oil composition.

12. The metalworking oil composition according to any one of claims 1 to 11, wherein a total content of the base oil (A) and the organic acid metal salt (B) is 70% by mass or more based on a total amount of the metalworking oil composition.

13. The metalworking oil composition according to any one of claims 1 to 12, wherein a water content is less than 1.0% by mass based on a total amount of the metalworking oil composition.

14. The metalworking oil composition according to any one of claims 1 to 13, which is a wire electrical discharge machining oil composition for interposing the metalworking oil composition between a workpiece for metalworking and a wire electrode, and discharging electricity between a metal of the workpiece for metalworking and the wire electrode to machine the workpiece for metalworking.

15. An electrical discharge machining method comprising interposing the metalworking oil composition according to any

one of claims 1 to 14 between a workpiece for metalworking and a wire electrode, and discharging electricity between a metal of the workpiece for metalworking and the wire electrode to machine the workpiece for metalworking.

**INTERNATIONAL SEARCH REPORT**

International application No.
**PCT/JP2024/012401**

**A. CLASSIFICATION OF SUBJECT MATTER**

***C10M 171/00***(2006.01)i; ***B23H 1/08***(2006.01)i; ***C10M 101/02***(2006.01)i; ***C10M 107/02***(2006.01)i; ***C10M 129/10***(2006.01)i; ***C10M 129/54***(2006.01)i; ***C10M 135/10***(2006.01)i; ***C10M 159/22***(2006.01)i; ***C10M 159/24***(2006.01)i; ***C10M 171/02***(2006.01)i; *C10N 10/02*(2006.01)n; *C10N 10/04*(2006.01)n; *C10N 20/00*(2006.01)n; *C10N 20/02*(2006.01)n; *C10N 30/00*(2006.01)n; *C10N 40/20*(2006.01)n; *C10N 40/24*(2006.01)n

FI: C10M171/00; C10M107/02; C10M101/02; C10M159/22; C10M159/24; C10M129/10; C10M129/54; C10M135/10; B23H1/08; C10M171/02; C10N20:02; C10N20:00 Z; C10N10:02; C10N30:00 Z; C10N20:00 A; C10N40:20 Z; C10N40:24 Z; C10N10:04

According to International Patent Classification (IPC) or to both national classification and IPC

**B. FIELDS SEARCHED**

Minimum documentation searched (classification system followed by classification symbols)

C10M171/00; B23H1/08; C10M101/02; C10M107/02; C10M129/10; C10M129/54; C10M135/10; C10M159/22; C10M159/24; C10M171/02; C10N10/02; C10N10/04; C10N20/00; C10N20/02; C10N30/00; C10N40/20; C10N40/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 2015/152022 A1 (IDEMITSU KOSAN CO., LTD.) 08 October 2015 (2015-10-08) claims, paragraphs [0011]-[0015], [0029]-[0034], examples 1, 2, comparative examples 2, 3 | 1-15 |
| A | JP 2008-105172 A (IDEMITSU KOSAN CO., LTD.) 08 May 2008 (2008-05-08) claims, examples | 1-15 |
| A | JP 63-74523 A (IDEMITSU KOSAN CO., LTD.) 05 April 1988 (1988-04-05) claims, examples | 1-15 |
| A | JP 2012-110975 A (IDEMITSU KOSAN CO., LTD.) 14 June 2012 (2012-06-14) claims, examples | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/012401**

**C. DOCUMENTS CONSIDERED TO BE RELEVANT**

| Category* | Citation of document, with indication, where appropriate, of the relevant passages | Relevant to claim No. |
|---|---|---|
| A | JP 2002-46021 A (NIPPON MITSUBISHI OIL CORP.) 12 February 2002 (2002-02-12) claims, examples | 1-15 |

Form PCT/ISA/210 (second sheet) (July 2022)

**INTERNATIONAL SEARCH REPORT**
**Information on patent family members**

International application No.
**PCT/JP2024/012401**

| Patent document cited in search report | Publication date (day/month/year) | Patent family member(s) | Publication date (day/month/year) |
| --- | --- | --- | --- |
| WO 2015/152022 A1 | 08 October 2015 | US 2017/0173716 A1<br>claims, paragraphs [0016]-[0023], [0044]-[0076], examples 1, 2, comparative examples 2, 3<br>EP 3127643 A1<br>CN 106457435 A | |
| JP 2008-105172 A | 08 May 2008 | (Family: none) | |
| JP 63-74523 A | 05 April 1988 | US 4849122 A<br>claims, examples<br>EP 261546 A2 | |
| JP 2012-110975 A | 14 June 2012 | (Family: none) | |
| JP 2002-46021 A | 12 February 2002 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H06155165 A